(19) Europäisches Patentamt
European Patent Office
Office européen des brevets

(11) **EP 2 517 395 B1**

(12) **EUROPEAN PATENT SPECIFICATION**

(45) Date of publication and mention
of the grant of the patent:
**26.08.2015 Bulletin 2015/35**

(51) Int Cl.:
***H04L 5/00*** (2006.01)

(21) Application number: **10810936.4**

(22) Date of filing: **15.12.2010**

(86) International application number:
**PCT/IB2010/055850**

(87) International publication number:
**WO 2011/077324 (30.06.2011 Gazette 2011/26)**

(54) **MIMO CHANNEL LOOPBACK**

MIMO-KANAL-PRÜFSCHLEIFE

REBOUCLAGE DE VOIE MIMO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2009 US 645856**

(43) Date of publication of application:
**31.10.2012 Bulletin 2012/44**

(73) Proprietor: **Telefonaktiebolaget L M Ericsson
(publ)
164 83 Stockholm (SE)**

(72) Inventor: **DENT, Paul, W.
Pittsboro
NC 27312 (US)**

(74) Representative: **Hoffmann Eitle
Patent- und Rechtsanwälte PartmbB
Arabellastraße 30
81925 München (DE)**

(56) References cited:
**WO-A1-2006/034577 WO-A2-2009/051456
US-A1- 2003 036 359**

- **HYUNSEOK YU ET AL: "Transmit selection
  diversity technique in the MIMO-OFDM systems
  for HSDPA", VEHICULAR TECHNOLOGY
  CONFERENCE, 2004. VTC 2004-SPRING. 2004
  IEEE 59TH MILAN, ITALY 17-19 MAY 2004,
  PISCATAWAY, NJ, USA,IEEE, US, vol. 1, 17 May
  2004 (2004-05-17), pages 362-366VOL.1,
  XP010764820, DOI: DOI:10.1109/VETECS.
  2004.1387975 ISBN: 978-0-7803-8255-8**

**Description**

**BACKGROUND**

The present invention is generally directed to providing channel feedback in a wireless system, and more particularly directed to providing channel feedback in orthogonal frequency division multiplex (OFDM) multiple-input, multiple-output (MIMO) wireless systems.

Wireless communications systems increasingly seek ways to improve signal quality and/or increase the data rate. One solution uses multiple antennas at the transmitter to implement multiple-input, single-output (MISO) operations. Multiple transmitting antennas may be used in different ways, depending on the relative location of the transmitting antennas. If the transmitting antennas are closely spaced, e.g., on the order of a wavelength or less, they can be used in an array for forming a directional beam. If, on the other hand, the transmitting antennas are more widely spaced, e.g., on different sites, they can be used to provide non-coherent or coherent macrodiversity. In non-coherent macrodiversity, the transmitter makes no attempt to ensure that the signals arrive in-phase at a remote receiver. Instead, the signals add non-coherently at the receiver to change the statistics of fading in a favorable way. In coherent macrodiversity, a plurality of fixed stations collaborate to transmit signals to a plurality of mobile stations using the same region of the frequency spectrum at the same time, the collaboration being such that the signal intended for a given mobile station adds coherently from the multiple sites at that mobile station, and furthermore, may be arranged to cancel at others. When widely-spaced transmitters use coherent macrodiversity to cause their signals to add coherently at a particular mobile station, the transmitters and their respective antennas are engaged in "cloudforming" rather than "beamforming," as the region of space within which the signals add constructively is a fraction of a wavelength in size.

U.S. Patent No. 6,996,380 to current Applicant, incorporated herein by reference, describes one exemplary coherent macrodiversity system. The '380 patent discloses how the inventive coherent macrodiversity system can be formulated either in the time domain or in the frequency domain. Either formulation results in each mobile station receiving an interference-cancelled and diversity-enhanced signal at every spot frequency across the frequency region in which it is receiving its intended signal.

To achieve the signal quality and/or data rate improvements enabled by multiple transmission antennas, the transmitter requires some knowledge of the propagation channel characteristics from each transmission antenna to each reception antenna. The propagation channel characteristics may be described either by a frequency response function in the frequency variable $j\omega$ or by an impulse response represented by a polynomial in powers of the delay operator "z".

Digitally coded feedback represents one method of providing downlink channel feedback from the mobile station to the base station. In digitally coded feedback, channel state information estimated by the mobile station and expressed as a set of binary values is digitally encoded and multiplexed with other uplink data, coded and interleaved, and transmitted as an uplink message to the network. By encoding the feedback, the channel state information is ultimately distributed across multiple subcarriers. The network receives the message and de-interleaves and decodes it. The problem with digitally coded feedback is that in situations where the channel changes rapidly, the channel state information arrives too late to be of any use.

Providing more timely feedback in the current art requires high speed acquisition and transmission of a high volume of channel feedback. Current research is attempting to develop various strategies to compress this high volume of data in order to achieve timely channel feedback with a reasonable data rate. However, the compression algorithms may quantize the channel data too coarsely, or, at the current state of the art, may require an excessive amount of processing.

U.S. Pat. No. 6,996,375 to current Applicant and U.S. Pat. No. 7,197,282 to current Applicant et al, describe an alternative method for providing more timely information regarding the downlink channel characteristics. Network transmissions to be collaboratively transmitted by the fixed base stations include known pilot symbol sequences to be used by each mobile station. For the cellular system currently under development known as LTE, the pilot sequences are unique to each network transmitting antenna. According to the '282 patent, the mobile station loops back to the network the composite signal exactly as received. The looped-back signals are then correlated in the network with the signals the network transmitted from each antenna, which are already known to the network, thereby determining the propagation channel characteristics from each network transmitting antenna to each mobile station that provides the looped-back signals. A correct amount of the known signal is then subtracted from the received signal so that it does not interfere with data decoding.

U.S. Pat. No. 7,224,942 to Applicant further shows that incomplete channel information may be obtained when the number of pilot sequences transmitted by the network antennas equals the number of mobile stations providing loopback, and that number is less than the number of network transmitting antennas. The '942 patent corrects this deficiency by causing the base stations to also collaboratively transmit dummy pilot signals which are constructed to cancel at the mobile stations if the channel knowledge is correct. Any residual un-cancelled component identifies any error in the downlink channel estimates, and therefore, enables the downlink channel estimates to be corrected.

In more recent developments, the mobile station may also possess multiple receive antennas, which results in a multiple-input, multiple-output (MIMO) system. When both the transmitter and the receiver use multiple antennas to communicate over a wireless channel, it is possible to resolve the channel into a number of decoupled channels known as Eigenmodes, which may then each carry a separate data stream, increasing the total data rate. MIMO transmissions require knowledge of the entire $l \times m$ propagation channel matrix from each one of the $l$ transmitting antennas to each one of the $m$ receiving antennas. In a time-domain formulation, each matrix element is a polynomial in the delay operator $z$ with complex coefficients. In a frequency domain formulation, there is an $l \times m$ matrix for each sub-frequency channel, but the elements of the matrix are single complex numbers. It is relatively straightforward to convert from one matrix representation to the other.

Recently, cellular system research has suggested an evolution to Orthogonal Frequency Division Multiplex for higher data rates. OFDM utilizes a large number of subcarriers to communicate data, where each subcarrier essentially provides a separate communication channel between each transmission antenna and each reception antenna. Thus, OFDM requires a large volume of channel feedback, particularly when used in MISO and MIMO systems. When this requirement is coupled with rapidly changing channels, e.g., when the receiver or transmitter is moving at a high rate of speed, OFDM faces some unique channel feedback challenges.

US-A1-2003/0036359 discloses processing of of loop-back information returned by one or more mobile stations that are served by a wireless communication network permits the network to compensate its transmit signals for increased transmission efficiency and reduced signal interference at the mobile stations. Generally, the network forms one or more transmit signals as a combination of different signals intended for the different mobile stations, and remembers transmit information associated with these transmit signals. The mobile stations return loop-back signals to the network, which determines transmit signal compensation information by comparing loop-back information to memorized information. The mobile stations may loop-back samples from composite received signals, from processed received signal samples, or loop-back estimates.; In the first case, processing at the network involves compensating the combined transmit signals at the transmit modulation rate, while the second case involves symbol rate processing of the individual information streams intended for the different mobile stations.

WO-A1-2006/034577 discloses a method and apparatus for determining a downlink channel response in an orthogonal frequency division multiplexing access (OFDMA) system. The method and apparatus uses the uplink quality indication channel for determining the downlink channel response, or uses round trip pilot relay channel sounding. The uplink quality indication channel may comprise modified mini-tiles. The subscriber station using round trip pilot relay channel sounding sends composite transponder pilots after receiving the DL pilots.

## SUMMARY

The present invention provides a method of providing channel feedback according to Claim 1.
Furthermore, the present invention provides an OFDM transceiver according to Claim 7.

## BRIEF DESCRIPTION OF THE DRAWINGS

FIG. 1 shows an exemplary MISO wireless system.
FIG. 2 shows a general OFDM transmitter.
FIG. 3 shows a general OFDM receiver.
FIG. 4 shows another general OFDM transmitter.
FIG. 5 shows a diagram of a transceiver according to one exemplary embodiment of the present invention.
FIG. 6 shows an exemplary time multiplexing scheme for sharing OFDM subcarriers between data values and feedback values.

## DETAILED DESCRIPTION

The following describes mapping channel feedback values, e.g., received reference signal values or channel estimates derived therefrom, on a one-to-one basis to individual transmission subchannels to efficiently provide a large volume of channel feedback to a remote transmitter, such as is often required in OFDM MISO and MIMO systems. More particularly, an OFDM transceiver receives a reference value on a reception subchannel of an OFDM signal received from a remote transceiver. Subsequently, the OFDM transceiver maps a feedback value, e.g., the received reference value or a channel estimate derived therefrom, to a single transmission subchannel of an outgoing OFDM signal. For example, the OFDM transceiver may map the feedback value to an input of a frequency transform unit, such as an inverse discrete Fourier transform unit, to map the feedback value to a single transmission subchannel comprising an OFDM transmission subcarrier. The OFDM transceiver transmits the outgoing OFDM signal to the remote transceiver to provide the feedback value to the remote transceiver.

It will be appreciated that the above may be used to provide any number of feedback values to the remote transceiver, where each feedback value is mapped in a one-to-one correspondence to a single transmission subchannel. While the channel feedback is generally described in terms of providing downlink channel feedback to a fixed network station, it will be appreciated that it may also be used to provide uplink channel feedback to a mobile station. Further, while the feedback values are generally described as reference signal values or channel estimates derived therefrom, the feedback values may also comprise data signal values received on a reception subchannel and mapped to a transmission subchannel.

The invention described herein provides timely channel feedback for multi-carrier systems, e.g., OFDM-MISO and OFDM-MIMO systems. To that end, the present invention provides an OFDM transceiver that receives a downlink reference value, e.g., a pilot signal, on a corresponding reception subcarrier of an OFDM signal received from a remote transceiver. The receiving transceiver maps a feedback value to a single transmission subcarrier of an outgoing OFDM signal, where the feedback value comprises a downlink reference value, e.g., pilot signal, or a channel estimate derived therefrom. The OFDM transceiver subsequently transmits the outgoing OFDM signal to the remote transceiver to provide the channel feedback to the remote transceiver. In some embodiments, the received OFDM signal may include a downlink pilot signal on more than one reception subcarrier. In these embodiments, the transceiver selects one or more of the received pilot signals or the channel estimates derived therefrom as feedback values, and maps different ones of the feedback values in a one-to-one correspondence to selected transmission subcarriers.

It will be appreciated that downlink data values may be selected as the feedback values in addition to or instead of the pilot signal values, as these data values are also known to the network. However, it is becoming more common to use high-order modulation constellations for data encoding, e.g., 16 QAM or 64 QAM, and using these constellations causes the resulting data signal values to have a variable amplitude. As it is generally more desirable to feedback downlink values that were transmitted at a constant amplitude, such as the pilot signal values, the feedback values of the present invention generally comprise the pilot signal values or the channel estimates derived therefrom.

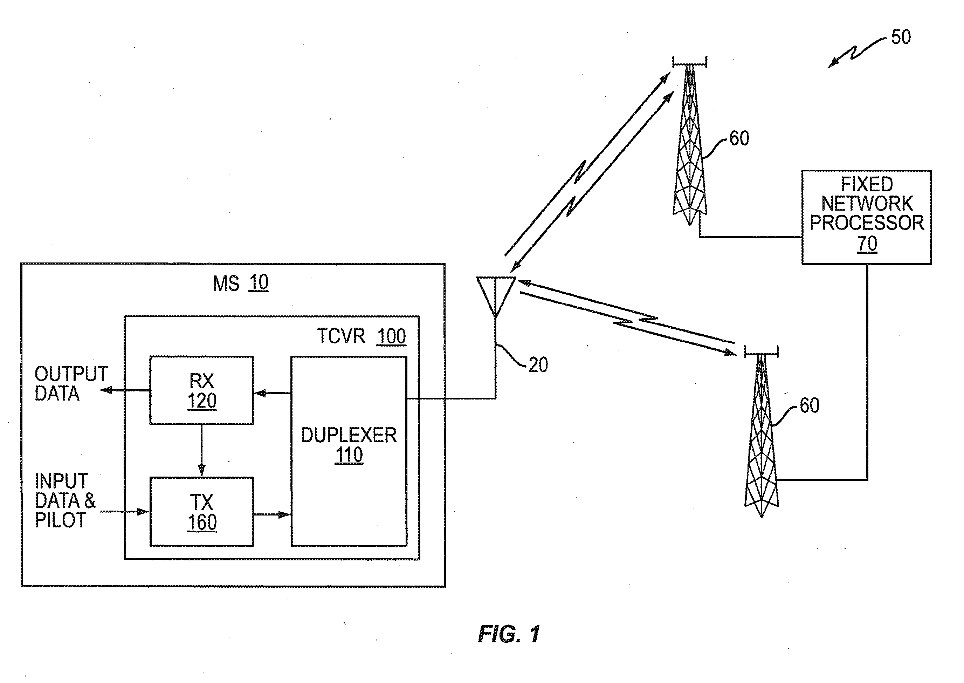

Figure 1 shows one exemplary multi-carrier transceiver 100 implemented in a mobile station 10 in a wireless network 50. Network 50 further includes a multi-antenna fixed network section that transmits/receives signals to/from the mobile station 10 via two or more fixed base stations 60 communicatively coupled to a network processor 70, where each base station 60 may comprise one or more transmission antennas. Each base station 60 transmits one or more multi-carrier signals, e.g., OFDM signals, to the mobile station 10. Mobile station 10 receives the transmitted signals using antenna 20 and passes them to the transceiver 100 to, among other things, provide downlink channel feedback back to the base stations 60. While Figure 1 shows the inventive transceiver 100 as being part of the mobile station 10, it will be appreciated that transceiver 100 may alternatively be implemented in base station 60 to provide uplink channel feedback to the mobile station 10.

The multi-carrier transceiver 100 comprises a duplexer 110, receiver 120, and transmitter 160, and is configured to provide downlink channel feedback to the base stations 60. In particular, receiver 120 filters, samples, and digitizes the received OFDM signal, and subsequently applies a frequency transform to the digitized OFDM signal to separate the downlink pilot signal values carried by one or more reception subcarriers from the downlink data signal values carried by one or more of the remaining reception subcarriers. Either one or more of the received pilot signals, or one or more channel estimates derived therefrom, both of which are referred to herein as feedback values, are subsequently multiplexed with uplink input data and/or pilot signals in transmitter 160 to provide the downlink channel feedback to the base station 60 as part of an uplink OFDM signal. For example, transmitter 160 may frequency multiplex the feedback values with the uplink data and/or pilot signals such that the feedback values occupy different transmission subcarriers of the uplink OFDM signal than the uplink data and pilot signals. Alternatively, the feedback values may occupy the same transmission subcarriers of the uplink OFDM signal as the uplink data and/or pilot signals when the feedback values are linearly combined with the already encoded and modulated uplink data and/or pilot signals, or when the feedback values are time multiplexed with the already encoded and modulated uplink data and/or pilot signals. In any event, the multiplexed signal generated by transmitter 160 is digital-to-analog converted to generate a multi-carrier transmission signal, e.g., a quadrature modulating (I, Q) signal, which is subsequently up-converted, amplified, and transmitted via the transmit path of duplexer 110 and antenna 20 to simultaneously provide the downlink channel feedback values along with the uplink data and/or pilot signals in an uplink OFDM signal transmitted to the base station 60.

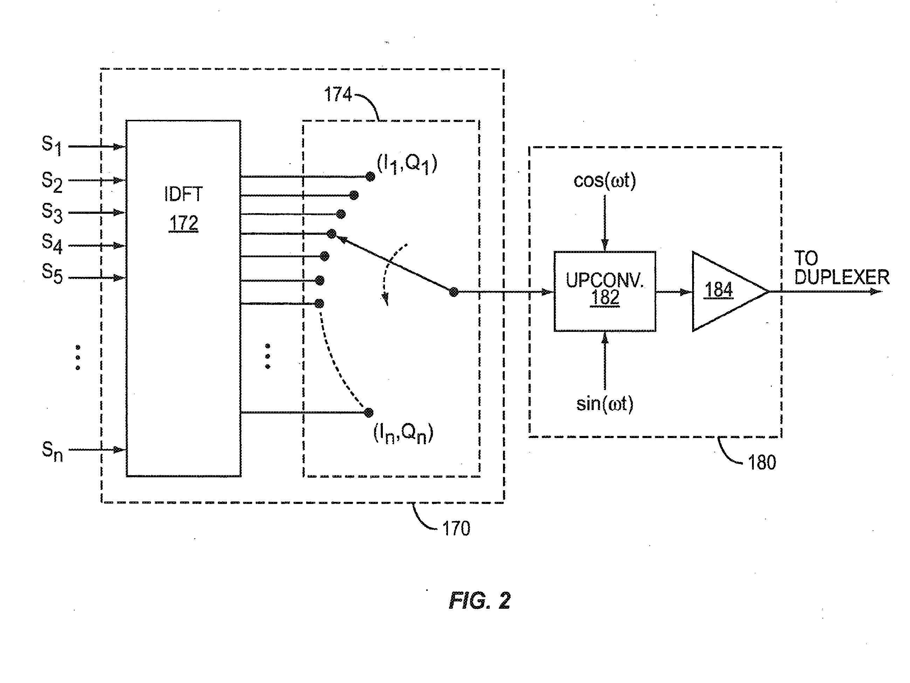

Before describing further details of the present invention, the following first describes the basic operation of OFDM transmitters and receivers. Figure 2 shows simplified internal details of part of an OFDM transmitter 160. Previously encoded signal values, e.g., data and/or pilot signal values, to be transmitted on different subcarriers ($S_1 \text{ K } S_N$) are input to an OFDM modulator 170 comprising a frequency transform unit 172, e.g., an Inverse Discrete Fourier Transform (IDFT) unit, and a parallel-to-serial converter 174. Transform unit 172 may comprise a specialized, hardwired IDFT circuit or a DSP implementation that frequency transforms the $N$ input values to at least $N$ output values. Parallel-to-serial converter 174 converts the frequency transformed values from parallel form to serial form by successively selecting the frequency-transformed values in a fixed order. Because the values output by IDFT 172 may be complex, each value in the serial signal stream may be complex, in which case the serial stream comprises a stream of real parts and a stream of imaginary parts, e.g., a stream of (I,Q) values.

In some cases, it is advantageous to further use IDFT 172 to over-sample the input signals to generate more than $N$ output values. For example, a 2048-point IDFT may transform $N = 1200$ input values to 2048 output values. The 848 unused inputs may be set to zero, representing 424 empty spectral bins on either side of the 1200 spectral bins used for the 1200 input values. Oversampling by the factor 2048:1200 simplifies subsequent anti-aliasing filtering needed to limit out-of-band spectral energy.

The serial signal stream output by OFDM modulator 170 is applied to transmission unit 180 comprising an up-converter 182 and amplifier 184, e.g., a power amplifier. Up-converter 182 converts the stream of values, which may comprise a stream of I-values and the stream of Q-values, to continuous-time signals using known filtering, digital-to-analog conversion, and up-conversion techniques to generate an OFDM modulated radio frequency signal. The filter frequency response of the up-converter 182 passes frequencies corresponding to the used spectral bins, e.g., the 1200 bins exemplified above, while attenuating frequencies beyond the exemplary 2048 bins. Thus, oversampling as described above leaves a margin between the required passband and the required stop band so that the filter is not required to have a steep rate of cutoff. Amplifier 184 amplifies the multi-carrier radio frequency signal to a desired transmit power level for transmission via antenna 20.

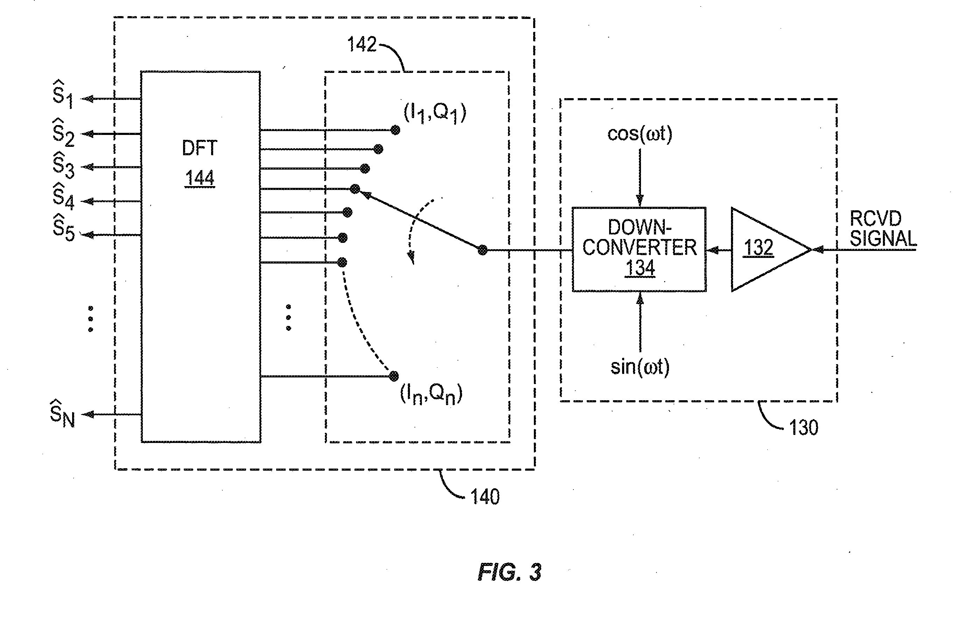

Figure 3 shows simplified internal details of part of a receiver 120 adapted to receive OFDM signals. The received multi-carrier signal is input to a reception unit 130 comprising an amplifier 132, e.g., a low noise amplifier, and a down-converter 134. Amplifier 132 amplifies the received signal, which is subsequently downconverted, analog-to-digital concerted, and filtered in downconverter 134 to generate a complex digital baseband signal. The reception unit 130 may comprise any known downconverter having the means to select an operating frequency, means to filter the received multi-carrier signal to select the signal bandwidth centered on the selected operating frequency, and means to sample and analog-to-digital convert the filtered signal to generate complex digital I,Q samples. For example, the reception unit 130 may comprise a zero-IF or homodyne reception unit, a low-IF reception unit, or a conventional superheterodyne reception unit in which the final IF signal is demodulated by mixing with cosine and sine reference signal waveforms in a quadrature mixer arrangement, or the logpolar receiver defined by Applicant's U.S. Patents Nos. 5,084,669, 5,070,303, and 5,048,059, which was re-issued as RE37,138.

The digital samples from the downconverter 134 are applied to a multi-carrier demodulator 140 comprising a serial-to-parallel converter 142 and a transform unit, e.g., a DFT 144. Serial-to-parallel converter 142, which for example may comprise a DSP memory, assembles the input stream of digital samples into a parallel block of samples, one for each subcarrier. DFT 144 frequency transforms the input block of digital samples to reconstruct estimates of the originally transmitted data and/or pilot signal values. It will be appreciated that DFT 144 implements the reverse or conjugate process of the IDFT 172 in transmitter 160. As in the case of the transmitter 160, it may be useful to oversample the downconverted signal in order to permit a relaxed specification for the signal selection filters. In any case, the output of DFT 144 comprises the same number of samples as the input block, which, with oversampling, is greater than $N$. Only $N$ samples are used however, and the rest, which correspond to out-of-band spectral components not completely suppressed by the signal selection filters, are discarded. The output samples $\hat{S}_1$ K $\hat{S}_N$ represent estimates of the samples input to the transmitter 160, with the addition of transmission noise and any distortion effects caused by the propagation channel.

The simplified receiver components of Figure 3 were deliberately illustrated in the same form as the simplified transmitter components of Figure 2 to explain how these aspects of the transmission and reception processes are essentially inverses of each other, with the result being that estimates of the $N$ complex samples ($S_1$ K $S_N$) input to the transmitter 160 appear at the output of the receiver 120, effectively establishing $N$ parallel channels of communication. These parallel channels are normally employed to send digital information, using a suitable modulation constellation to map bit patterns to points in the complex I,Q plane. A practical OFDM transceiver 100 comprises many more details than shown in Figures 2 and 3, e.g., pulse shaping, cyclic prefixes, equalizers etc., which, although not essential to an understanding of the current invention, may be found in the following disclosures to current Applicant filed in the United States: U.S. Patent Application Serial No. 12/126,576 titled "Communicating with root-Nyquist, self-transform pulse shapes" and filed 23 May 2008; U.S. Patent Application Serial No. 12/255,343 titled "Use of Pilot Code in OFDM and other non-CDMA systems" and filed 21 Oct 2008; and U.S. Patent Application Serial No. 12/045,157 titled "Compensation of Diagonal ISI in OFDM signals" and filed 10 Mar 2008. These applications are incorporated by reference herein.

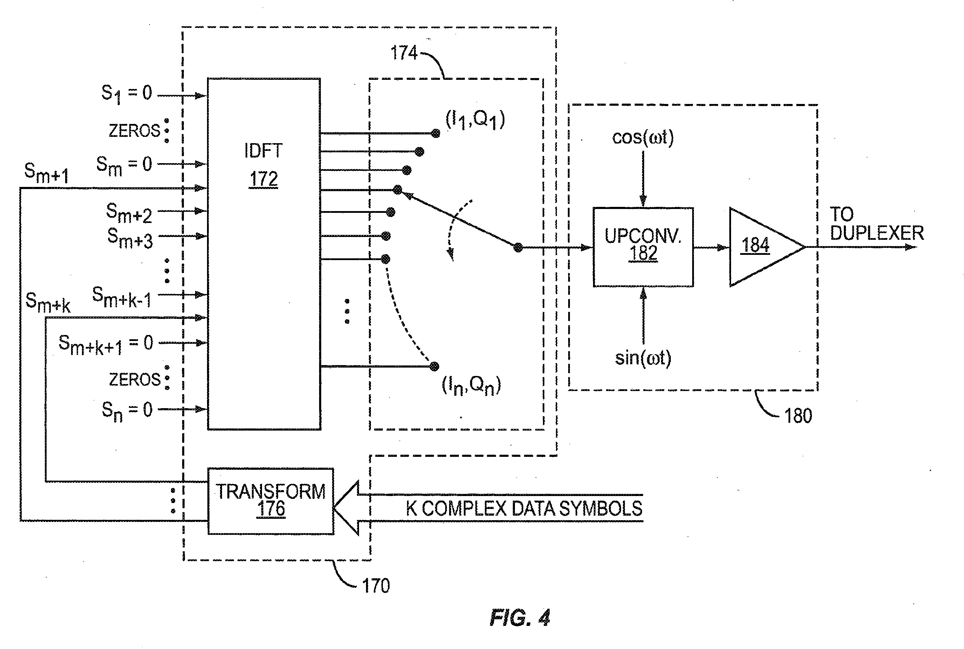

Figure 4 shows alternative simplified details for transmitter 160. This exemplary transmitter 160 includes an additional transform circuit 176 that pre-transforms $K$ or fewer data and pilot symbol values across $K$ of the $N$ subcarriers prior to input to the above-mentioned 2048-point IDFT 172. Particularly when the number of data and pilot symbol values $S_1$ K $S_N$ to be transmitted is substantially smaller than the size of IDFT 172, the additional $K$-point transform unit 176 may help reduce the peak-to-mean ratio of the transmitted signal, which helps improve transmitter efficiency and battery life. It will be appreciated that if the transmitter 160 preprocesses any of the transmit samples $S_1$ K $S_N$ through the above-mentioned additional transform circuit 176, then the receiver 120 would likewise comprise an additional, complementary transform circuit to post process those samples output from DFT 144, thereby reproducing the samples $S_1$ K $S_N$ in all cases.

To understand how the transmitter 160 of Figure 4 operates, consider the following example. Out of the $N$

complex symbols $S_1$ K $S_N$ that can be transmitted, only a number $K < N$ are used for carrying data and the other $N - K$ are set to zero. For example, symbols $S_1$ K $S_M$ and $S_{M+K+1}$K $S_N$ can be set to zero, while symbols $S_{M+1}$ K $S_{M+K}$ are used to carry data. In one embodiment, a block of $K$ non-zero symbol values is input to $K$-point transform unit 176 to reduce the peak-to-mean transmission power. In this case, the $K$ transformed symbol values are input to IDFT 172, along with two bordering blocks of ½ ( $N - K$ ) zero symbol values. These blocks of zero symbol values are over and above any zero symbol values used to create oversampling in IDFT 172. It will be appreciated that the arrangement of zero symbols and non-zero symbols is not restrictive, and other arrangements can be used. However, it may be beneficial to concentrate the OFDM subchannels used by one transmitter in order to more simply be able to allocate other parts of the spectrum to other transmitters, as attempting to interleave the subchannels used by one transmitter with the subchannels used by another transmitter is more prone to interference difficulties, especially when the signals are received at greatly disparate signal strengths.

It will be appreciated that the feedback value multiplexing described herein may occur as part of the IDFT operations or the $K$-point transform operations. Thus, the feedback values may be applied as described further below to either the inputs of IDFT 172 or the inputs of the $K$-point transform unit 176. It will be appreciated that the values applies to the $K$-point transform unit 176, including any feedback values, are spread over all of the OFDM subcarrier frequencies. Nevertheless, each input of the $K$-point transform unit 176 corresponds to a unique uplink subchannel capable of conveying a complex number from the transmitter to the receiver. Thus, while the present invention is generally described herein in terms of a one-to-one mapping of feedback values to selected transmission subcarriers, the present invention more generally maps feedback values in a one-to-one correspondence to selected uplink subchannels, where the term "subchannel" as used herein refers to a unique communication channel corresponding to one input of a transform unit, e.g., the IDFT 172 or the $K$-point transform unit 176. In any event, these two alternative treatments of the feedback values are not critical to the operation of the invention, and merely affect how the feedback values are extracted from the received signal at the base station 60. The two alternatives can therefore be regarded as additional variations on the type of transmitter 160.

Given the above transmitter and receiver discussions, it is readily apparent that MISO and MIMO systems employing OFDM require a high volume of channel feedback information, where the feedback is indicative of the propagation channel characteristics from each transmitter or transmitting antenna 60 to each mobile transceiver 100 or receiving antenna 20 for multiple subcarriers. The transceiver 100 of the present invention provides a mechanism for satisfying that requirement. It will be appreciated that transceiver 100 may be located in different mobile stations 10, and in the case of MIMO operation, multiple receiving antennas 20 attached to multiple transceiver chains may be located in a same mobile station 10. Further, it will be appreciated that the feedback values comprise values indicative of the channel state from a network to multiple receive antennas, e.g., received pilot signals or channel estimate information derived therefrom. In some cases, only the difference between the channels to different antennas may be needed, e.g., the difference in phase and the difference in amplitude, and such "difference" information is to be understood to be comprised by the term "feedback values" and/or the term "channel estimates." For example, a feedback value indicative of the difference in phase and amplitude between two receive antennas on a same selected reception subcarrier can be feedback on a selected transmission subcarrier or communications channel.

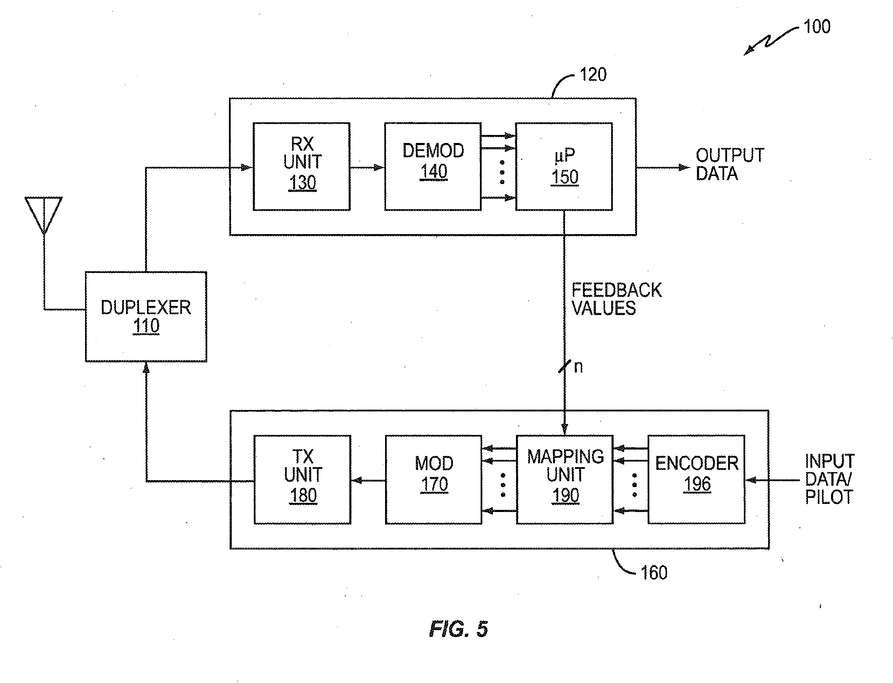

Figure 5 shows details for the transceiver 100 of Figure 1 when configured according to the present invention to provide downlink channel-related feedback values to the base station 60. Transceiver 100 comprises the duplexer 110, receiver 120, and transmitter 160. Receiver 120 comprises the reception unit 130 and demodulator 140 that operates as described above with respect to Figure 3 to separate the received OFDM signal into the downlink pilot and data signal values corresponding to the individual OFDM subcarriers. Transmitter 160 comprises the modulator 170 and transmission unit 180 that operates as described above with respect to Figure 2 or Figure 4. In addition, the receiver 120 comprises a processor 150, and the transmitter 160 comprises a mapping unit 190 and an encoder 196. In addition to decoding the downlink data, processor 150 further selects one or more of the received pilot signals as the one or more feedback values to be transmitted to the base station 60. It may also be realized that OFDM has the capability to communicate arbitrary complex values, such as channel coefficients, and not just discrete, quantized values such as data symbols. Therefore, the processor 150 calculates channel estimates that characterize the propagation paths from the fixed base station 60 to the mobile station 10 based on the received pilot signals, and selects one or more of these channel estimates as the one or more feedback values to be transmitted back to the base station 60. By providing the downlink pilot signals or the corresponding channel estimates to the IDFT 172 without first passing them through other uplink signal processors, e.g., encoder 196, the present invention avoids some of the time delays associated with current feedback solutions. In any case, the feedback values are supplied to the mapping unit 190 in transmitter 160. Mapping unit 190 maps the feedback values and any encoded input data and/or pilot signals to the OFDM transmission subcarriers, such that different feedback values are mapped, in a one-to-one correspondence, to different transmission subcarriers. The mapped feedback values, along with the already encoded uplink data and pilot signals, are fed to modulator 170, which processes the input signals as discussed above with respect to Figures 2 or 4.

It will be appreciated that some available downlink pilot signals or channel estimates may not be selected as feedback values for transmission to the base station 60, or may not be able to be transmitted, in a particular OFDM symbol period. However, an advantage provided by the present invention is that those downlink pilot signals or channel estimates selected as feedback values for transmission to the base station 60 are communicated from the receiver 120 to the transmitter 160 with minimum delay, and avoid the delay suffered by the user data path caused by encoder 196, e.g., the time delay due to coding, interleaving, deinterleaving, and decoding. It will further be appreciated that the downlink pilot signals or channel estimates selected as feedback values for transmission may be selected from the available pool values according to a pre-agreed schedule, which may be pseudorandom, such that all downlink pilot signals or channel estimates are received back at the base station 60 within a finite time period.

By multiplexing the feedback values with already encoded uplink data and pilot signals, the present invention provides full or near-full channel state feedback in a timely manner, even in the presence of a rapidly changing channel. Full channel state feedback implies that the network receives complete knowledge of the complex impulse response or frequency response of the propagation channel from each transmitting antenna to each receiving antenna. Knowing either the complex impulse response or the complex frequency response is equivalent, as these may be derived one from the other by means of Fourier Transformation. When full channel state knowledge is available to the fixed network processor 70, there are many ways in which the multiple base stations 60 can collaboratively or individually optimize their transmissions to improve communication of information on the downlink from the network to the mobile stations 10. Some of these ways are described in the herein-incorporated patents to current applicant et al., and were variously described in the Background Section as Beamforming, Cloudforming, Coherent Macrodiversity and MISO operation. Alternatively, MIMO operation may be used to increase data rate to mobile stations 10 that have multiple receiving antennas 20 and transceiver chains 100. In any event, base station 60 generally maintains a running estimate of the downlink channel characteristics based on all previously received feedback values, which it updates upon receipt of the latest feedback values.

The feedback values may comprise complex numbers that are multiplexed with the already encoded uplink data and/or pilot symbols. For example, mapping unit 190 may frequency multiplex the feedback values with the uplink data and/or pilot signals by mapping the feedback values to the inputs of the IDFT 172 not already allocated to uplink data and/or pilot signals, e.g., those inputs bordering the uplink data and/or pilot inputs that would otherwise have been allocated to zero value inputs. It will be appreciated, that this is merely one arrangement which is not suggested to be the optimum; different interleavings of feedback values, uplink data, and uplink pilot signals will be considered bellow.

Alternatively, the feedback values may share uplink subcarriers with the already encoded uplink data and/or pilot signals. For example, mapping unit 190 may linearly add feedback values to the already encoded uplink data or pilot signals such that each feedback value occupies a different one of the uplink subcarriers that is also being used by one of the uplink data or pilot signals at the same time. When the received pilot signals are selected as the feedback values for this embodiment, it is expected that the network processor 70, by knowing what pilot signals it transmitted, could subtract out the interference caused by the feedback values to the data or pilot symbols. In still another example, mapping unit 190 may time multiplex the feedback values with one or more of the already encoded uplink data or pilot signals. In this case, the feedback values occupy the same uplink subcarriers as the uplink data or pilot signals, but at different times.

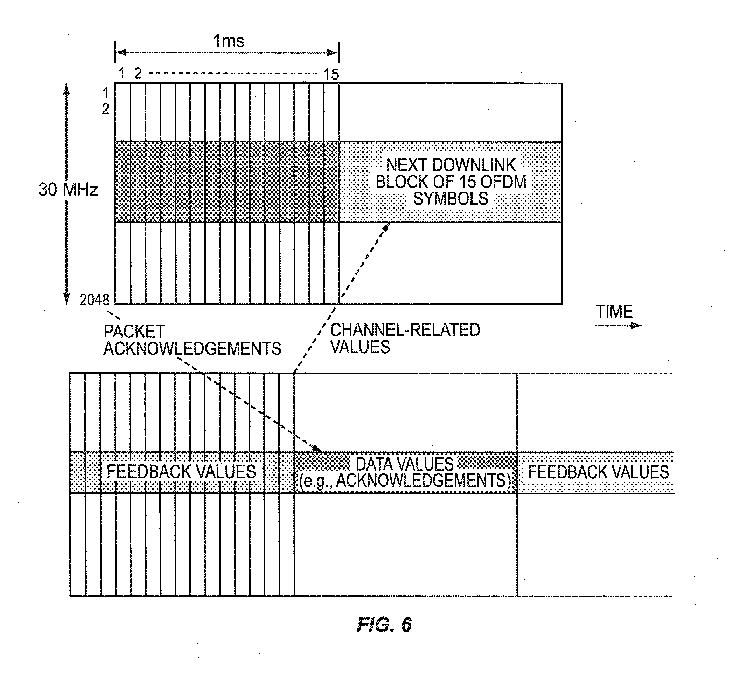

Figure 6 shows one exemplary time-multiplexing format that may be used for the time multiplexing embodiment. In Figure 6, time runs from left to right, and frequency runs from top to bottom. The upper part of the Figure 6 shows the time-frequency occupancy of the downlink transmission from base stations 60 to the mobile station 10. The total number of FFT frequency bins is 2048, of which, as previously mentioned, not all are used for data transmission. The frequency bins used for data transmission are used are shown shaded in Figure 6. A transmission block lasting 1 ms comprises 15 OFDM symbols of 66.6 $\mu$s duration each. The lower part of the Figure 6 shows the time-frequency occupancy of the uplink transmission from the mobile station 10 to the network antenna 60. The number of OFDM subcarriers used on the uplink may be considerably less than the up to 1200 that may be used on the downlink, so the shaded area is narrower for the uplink. There may also be a time-displacement between the 1 ms block structure of the uplink compared to the downlink. The uplink is illustrated as using alternate 1 ms blocks to transmit uplink data and/or pilot signals, e.g., acknowledgement of data packets previously received in one or more downlink blocks, interleaved with every other 1 ms block that transmits the feedback values. In this implementation, because the feedback values and uplink data/pilot signals are not transmitted during the same 1 ms block, there is complete freedom to choose the format for the feedback values independently of the format for the data values. When the feedback values are used by the network as part of a coherent macrodiversity system, it is likely that the network of base stations 60 is able to use its base station receivers collaboratively to separate multiple mobile station transmissions using the same frequencies at the same time. Then it is permissible for a second mobile station 10 to be transmitting feedback values in the 1 ms block used by a first mobile station 10 to transmit data values and vice versa - or even both may transmit feedback values at the same time or data values at the same time. Alternatively, the network may transmit to a first group of mobile stations 10 in even downlink blocks and to a second group of mobile stations 10 in odd downlink blocks. The first group of mobile stations 10 would reply with feedback values in an uplink block that was timely-placed relative to the next even downlink block, so that the next even downlink block transmission could be formulated with the benefit of those feedback values. The second group of mobile stations 10 would thus logically transmit their data values at the same time as the first group of mobile stations 10 transmitted feedback values, and vice versa.

For the time-multiplexed embodiment, mapping unit 190, which may utilize software running on a separate control processor (not shown), determines when feedback values should be inserted in place of the already encoded uplink data and/or pilot symbol values into the available OFDM subcarrier slots allocated to the mobile station 10. Mapping unit 190 further selects which uplink data and pilot signals to replace by feedback values, if not all of them for a given symbol or block of symbols. It will be appreciated that the selections may not be the same in every OFDM symbol period of 15-symbol block period, but may vary according to a schedule pre-agreed with the base station 60, or downloaded to the mobile station 10 from the network. Processor 150 may also participate in the process by narrowing the selection of feedback values presented to mapping unit 190.

The number of feedback values multiplexed with the uplink data and/or pilot signals in a given time period may be reduced for slow-speed mobile station 10 and increased for higher-speed mobile stations 10. It shall also be understood that the present invention is not limited to the single reception antenna 20 or transceiver 100 shown in the figures. Instead, the present invention may also apply to a plurality of reception antennas 20 and/or transceivers 100. A MIMO transceiver 100 has more potential downlink pilot signals or channel estimates to select and provide to the base station 60. Thus, processor 150 may be programmed to select more downlink pilot signals or channel estimates as feedback values per unit time when MIMO operations are in progress.

When the mobile station 10 transmits unprocessed (e.g., un-encoded) OFDM feedback values, e.g., downlink pilot signals, the feedback values may be normalized so that the sum of the squares of their absolute values is a constant. This normalization ensures that the feedback values consume a constant amount of the total available uplink power, independent of the strength at which the network transmissions were received. If it is important, other means can be used to inform the network of the signal strength received at the mobile station 10, such as a longer term feedback via a signaling channel. Despite such normalization of feedback values, the network can determine therefrom the relative proportions of different signals contained therein, such as the ratio of a signal not intended for the mobile station 10 to the signal intended for the mobile station 10.

When the mobile station 10 selects channel estimates calculated by the processor 150 as the feedback values, the calculated channel estimates may likewise be normalized to constant total power. If the channel estimates comprise downlink channel estimates for the signals received from more than one base station 60, the calculated channel estimates may be normalized by a common normalizing factor so as to preserve the correct relative ratios of the signals from multiple base stations 60, if this is important.

In order to correctly interpret feedback values provided to the network according to the present invention, the network processor 70 needs an estimate of the phase and amplitude changes that have occurred on the uplink, e.g., an uplink channel estimate. In the above-incorporated patents to the applicant it was shown that the order of the downlink and uplink channels may be reversed without affecting the loop channel from the network back to itself. Thus, given an estimate of the uplink channel, the network (base station 60 or processor 70) can estimate how its own transmissions would appear after passing through the uplink channel. Using the latter then as an input to the unknown downlink channel, the output of which is the feedback value received at the network, the network is able to estimate the downlink channel through knowing both the input and the output signals.

In the case of OFDM, it is necessary to determine the phase and amplitude change for each OFDM subchannel caused by the propagation path. For the uplink, the inclusion of known pilot signals from encoder 196 allows the determination of the phase and amplitude of the subchannels containing the uplink pilot signals. If the uplink pilot signals are placed sufficiently densely, the phase and amplitude of other subchannels may be determined by interpolation. Thus, it is advantageous to interleave uplink data and pilot signals with feedback values, so that the uplink pilot signals are uniformly spread among the other values. Such interleaving on a finer time scale than that shown in Figure 6 also has the advantage of providing even more timely feedback values to the base station 60, e.g., within one 66.6 $\mu$s OFDM symbol delay instead of within about a 1 ms 15-symbol block delay.

For example, suppose that the uplink data capacity required for packet acknowledgement was only 25% of the maximum available capacity when the mobile station 10 was receiving a high data rate on the downlink. Then every fourth subchannel can be allocated to contain an uplink data symbol value, and the other three-fourths can contain uplink pilot signals and feedback values, in a pattern such as PFDFPFDFPFDFPFD......, where P signifies an uplink pilot signal value, D signifies an uplink data value, and F signifies a feedback value. In the above pattern, 50% of the uplink capacity is devoted to feedback values, 25% to data, and 25% to uplink pilots. This proportion may be varied according to circumstances. For example, if it was considered beneficial to have more uplink pilots and fewer feedback values, the format could instead be PFPDPFPDPFPD....., in which 50% are uplink pilots, 25% data, and 25% feedback values.

Typically, an OFDM signal block is transmitted every $T$ seconds, where $T$ is of the order of the reciprocal of the subchannel frequency spacing. In pulse-shaped OFDM, $T$ may be exactly equal to the reciprocal of the subchannel frequency spacing. Furthermore, $T$ is typically short enough that the propagation channels can be considered to be reasonably constant over at least one $T$ or more. If the channel is able to be considered constant over a time $T$ when the mobile station 10 is traveling at the highest anticipated speed, then for mobile stations 10 traveling at lower speeds, the propagation channel will be constant for several $T$.

If a propagation channel has the same complex value (e.g., the same phase and amplitude) for all OFDM subchannels, it is said to be a "flat" channel. Signal reflections which are received relatively delayed are the main cause of non-flat channels. A reflection of relative delay $\tau_1$ and amplitude lower by a factor of $A_1$ relative to a main ray results in a non-flat frequency response given by:

$$h(\omega) = 1 + A_1 \mathrm{e}^{-\mathrm{j}\omega\tau_1}. \qquad (1)$$

When this frequency response is plotted versus $\omega$, the variation over the frequency subchannel range is found to be sinusoidal. The period of the sinusoid is the number of subchannel over which $\mathrm{j}\omega\tau_1$ changes by a multiple of $2\pi$, that is:

$$N \cdot d\omega \cdot \tau_1 = 2\pi \qquad (2)$$

or

$$N = \frac{2\pi}{d\omega \cdot \tau_1} = \frac{1}{df \cdot \tau_1}, \qquad (3)$$

where $df$ is the subchannel frequency spacing in Hertz. This period may be revealed by analyzing the set of complex values of the subchannels containing known pilots, after dividing out the value of the known pilots. A small multi-path signal reflection delay will thus result in a long period (large $N$) and a long reflection delay will result in a short period (small $N$). Multiple reflections of different delays will result in a corresponding number of periodicities in the channel variation across the frequency spectrum. The above may be used to apply filtering of the pilots across the frequency domain to reduce pilot noise. The preferred method of analysis is the Inverse Prony Algorithm disclosed in U.S. Patent Application Serial No. 12/478,473 to current applicant et al, which is incorporated herein by reference, although an Inverse Fourier Transform could alternatively be employed.

If the channel is also slowly varying in the time domain from one OFDM block to the next, the frequencies of this variation may be determined by frequency analysis, preferably also using an adaptation of Prony's algorithm from the above disclosure. Taken together, filtering along both the frequency and time domains can be applied using a two-dimensional filter. Such a filter may delete variations of unlikely high frequency, and may attenuate the amplitude of variations that are estimated to be of low signal-to-noise quality.

When the base station 60 receives an OFDM symbol from the mobile station 10 containing a multiplex of uplink pilots, uplink data, and feedback values, it first estimates the uplink channel using the uplink pilots, using any of the methods described herein or known in the art to smooth results and reduce noise-induced error. This estimation may be done with the aid of historical data gathered from previous uplink signals received. By interpolation, the uplink channel coefficients for the feedback and data symbol subcarrier frequencies are then obtained. These are purely complex numbers, as opposed to z-polynomials in the case of a non-OFDM signal. Each base station 60 knows what it transmitted on each subcarrier frequency, so can determine what would have been received on the feedback subcarriers if the signal had come through the uplink channel only by multiplication by the just determined uplink channel values. The difference between the latter and what is actually received on the uplink carriers is necessarily due to the downlink channel. Therefore, correlating the received feedback values with own-transmitted values on the same subcarriers as those from which the feedback values were selected according to the aforementioned pre-agreed schedule enables the base station 60 to estimate the downlink channel. Estimation of the downlink channel may employ the improved methods disclosed in the above-incorporated '473 application or U.S. Patent Application Serial No. 12/478,520, also incorporated by reference herein, and in particular, may estimate scatterer delays and Dopplers (= rate of change of delay) jointly for the uplink and the downlink, as the actual physical scatterers are expected to be in the same locations for both, albeit with differing complex scattering coefficients. In the '473 application, it was shown how the Inverse Prony method may determine scatterer delays jointly over a number of OFDM symbol blocks under the assumption that the scattered signal amplitudes may be optimized independently for each. This method may thus be applied when some of the symbol blocks comprise known signals that have been subject only to the uplink (e.g., uplink pilots) and some of the signal blocks have been subject only to the downlink (e.g., downlink transmitted values on the feedback subcarriers, to which only the determined uplink channel has been applied).

When the base stations 60 cooperate, they each inform each other, or else a central processing node is aware of what values were transmitted on each subcarrier frequency, thus enabling joint channel estimation of all downlink channels from each base station 60 to each mobile station 10 to be performed. When mobile stations 10 possess multiple receive antennas 20 connected to multiple transceivers 100 and transmit feedback values for each receive antenna 20 either at the same time or according to a pre-agreed schedule, then network processor 70 uses the received feedback values to estimate the downlink channels from each base station 60 to each mobile receiving antenna 20, and may use the information to construct MIMO, beam-formed or coherent macrodiversity transmissions.

Overlapping signals received from different mobile stations 10 can be separated either by designating different subcarriers to be used for feedback values associated with different mobile stations 10, or by having the mobile stations 10 apply a mobile-unique phase rotation sequence across the feedback values to render them different, or by scheduled time-multiplexing as discussed above with respect to Figure 6.

As discussed herein, the feedback values may comprise downlink channel estimates calculated based on downlink pilot signals received on different reception subcarriers. These channel estimates may take various forms, such as a per-subchannel complex channel value, or a delay profile comprising a set of complex values that determine an impulse response, and in either case time rates-of-change (time derivatives of I and Q values, phase values or amplitude values) may be estimated.

It is envisaged herein that the complex channel coefficients or other forms of complex feedback values preferably be mapped to the real and imaginary parts of a transmitted value $S_i$, thereby maintaining the full word length of digital precision available, without the need to truncate the word length to match the symbol values of a finite modulation constellation, such as 64-QAM applied to the uplink data. For example, if a complex channel value $(c_R, c_I)$ is available with 16 bits of precision for $c_R$ and $c_I$, then all 16 bits of the real and imaginary value are preferably used for a feedback value $S_F$. This can be regarded as using a $2^{32}$-QAM modulation constellation for the feedback values. It will be appreciated that the accuracy of recovery of the value at the receiver will depend on the signal to noise ratio, but at least the accuracy is not degraded by an unnecessary quantization to a smaller number of levels.

In prior art OFDM systems, channel estimation is assisted by including a proportion of known symbols in the transmission, e.g., by setting selected ones of $S_1$ to $S_N$ to equal known pilot signals. The selected symbols to be set to known pilot signals can vary from one OFDM block to the next, so that the known pilot signals are distributed in both the time and frequency dimension. A channel estimation algorithm then determines the channel through which the OFDM signal was received and its variation with time by processing the complex values received on the subcarriers associated with the known pilot signals. U.S. Patent Application Serial No. 12/255,343 titled "Use of Pilot Code in OFDM and Other Non-CDMA Systems," to current Applicant and filed 21 Oct 2008, discloses that channel estimation for OFDM systems can be advantageously facilitated in the same way as for CDMA systems, namely by linearly adding a known pilot code to the OFDM signal in the time domain. Because the pilot code is known, it can be subtracted and thus does not interfere with data transmission. This technique avoids having to waste data capacity by allocating OFDM subcarriers to pilot signals.

Channel estimation using either downlink pilot signals or downlink pilot codes may also be improved by generating channel estimates that represent the parameters of fixed scatterers in the environment that give rise to the channels varying due to mobile station movement relative to the scatterers instead of estimating varying channel coefficients. The above-discussed '473 and '520 patent applications describe scatterer estimation in more detail. In particular, these applications describe how to determine the parameters of signal scatterers in terms of their excess time delay, Doppler shift, or equivalently rate of change of time delay, and scattered signal amplitude. Depending on the required accuracy of the channel estimates, the number of scatterers required to model the environment may vary from a few dominant ones to of the order of a few hundred. In the former case, it is conceivable to provide feedback values comprising a few tens of sets of scatterer parameters from the mobile station 10 to the base station 60, but it is not so attractive or feasible to provide the characteristics of many hundreds of such feedback values.

In the latter case, it might be possible to take advantage of the fact that the scatterer parameters of delay and its derivative are the same for the uplink, apart from the complex signal amplitude attached to them, and thus some of their characteristics may be deduced at the fixed station 60 by independent means. Another possibility that can be used is for the base station 60 to lodge a formula with the mobile station 10 with which calculations shall be performed on the scatterer parameters to determine a smaller set of downlink channel parameters to be returned to the fixed station 60 as a feedback value.

However known pilot signals are embedded in the transmission to facilitate channel estimation, there are two different philosophies that may be used, which may termed "per-receiver pilots" and "per-transmitter pilots," respectively. In the per-transmitter pilot method, the aim of the pilots is to identify a particular transmitting antenna by a unique pilot signal. The receiver correlates received signals with the pilot code unique to each transmitting antenna, and thereby determines the downlink channel from each antenna. If the several transmitting antennas are collaborating to transmit data to the receiver, they will in addition be transmitting weighted and filtered versions of the data signal, the weighting and filtering functions being chosen to result in constructive combination of the wanted data signal at the receiver. The composite channel through which the receiver receives the data signal is thus a combination of the individual downlink channels determined from the pilot signals modified by the weighting and filtering functions. In order to determine the composite data channel therefore, the receiver needs to know these weighting and filtering functions in addition to the per-transmitter downlink channels. One method for the receiver to know the weighting and filtering functions is for the receiver to determine what functions it wants and command the transmitters to use them. Another method is for the receiver to report the per-transmitter channel estimates, and, knowing the algorithm that the collaborating network transmitters will use to determine the weighting and filtering functions therefrom, uses the same algorithm to compute the weighting and filtering functions or to compute the composite data channel directly. However, this ignores any constraints other receivers may have, and assumes that no feedback from other receivers has had an effect on the functions. Thus, the disadvantage of the per-transmitter pilot signal method may be seen to be that it limits the extent to which transmitters may optimize their collaborative transmissions to jointly favor more than one receiver at a time. Moreover, when the number of transmitting antennas is large, the result of each transmitting an own, unique pilot signal is to cause the phenomenon of "pilot pollution".

In the "per-receiver" pilot method, pilot signals are used which are unique to each receiver. The pilot signals are combined with the data signals that are also unique to each receiver, and transmitted in exactly the same way, e.g., by the transmitters collaboratively transmitting the combined pilot + data signals. The transmitters each use a different weighting and filtering function to form a version of the data + pilot signal for transmission, the functions being chosen so that wanted signals combine constructively at the receiver when received through the actual downlink channels. It can also be arranged that signals intended for a second receiver that are unwanted by a first receiver cancel at the first receiver, and vice-versa, thereby allowing multiple use of the same spectrum in the same area. In the per-receiver pilot method, pilot pollution is avoided, as unwanted pilot signals cancel at an unintended receiver. An issue with the per-receiver pilot method is that when the number of receivers is less than the number of transmitters, there are not enough pilot signals transmitted to determine all downlink channels. This problem was solved by the invention of U.S. Patent No. 7,224,942 to the current applicant, titled "Communications system employing non-polluting pilot codes," which is hereby incorporated by reference herein. In the '942 patent, a number of "dummy" pilot signals, equal in number to the deficiency of the number of receivers relative to the number of transmitters, are constructed and transmitted such that they cancel at the intended receivers when downlink channel estimates are accurate. Un-cancelled amounts appearing at the receivers are indicative of errors in the downlink channel estimates, which are then corrected. Using the method of non-polluting pilots of the '942 patent, the dummy pilot signals are constructed at the transmitting network in dependence on the downlink channels to all receivers. Thus, no receiver knows what the dummy pilot signals are, and thus cannot correlate with them to determine residual amounts; instead, the method of the '942 patent involves "loopback," in which each receiver loops back to the transmitting network the entire composite signal which it receives, and the network performs correlations with the signals it knows it transmitted. Thus, one application of the OFDM channel feedback process disclosed herein is to loopback all signals received from multiple network transmitters, including any dummy pilot signals, so that the transmitters may determine the weighting functions needed to be applied to each mobile's intended downlink signal such that each mobile receives only its own signal with substantially negligible interference from signals intended for other mobile stations.

It may thus be seen from the above discussion of per-receiver and per-transmitter pilots that methods fall into two distinct camps. In the per-transmitter pilot case, the receiver is able to determine the propagation channel from each transmitter, and to convey that information back to the network in a feedback channel. In the per-receiver pilot case, the receiver is not able to determine the propagation channel from each transmitter, and instead may only determine the composite channel. It therefore loopbacks all, or at least a sufficient portion of the entire, composite, received signal so that the network can analyze it using its knowledge of what was transmitted in order to determine the downlink channels.

The latter loopback method will also work for both per-transmitter and per-receiver pilot methods, and is likely to involve less delay and to better support loopback from multiple receivers simultaneously. Therefore, the inventive OFDM loopback method disclosed herein is suitable for use with either per-receiver pilots or per-transmitter pilots. In both cases, "determining downlink channels" can include determining the parameters of scatterers that give rise to the downlink channel characteristics, the parameters of the scatterers being assumed to be stable over a longer period than an individual channel coefficient.

The present invention takes advantage of the likelihood that, when a large amount of information is being transmitted on the downlink to a mobile transceiver 100, the uplink is not transmitting a large amount of information, as high bit rate services that require symmetrical, simultaneous high uplink and downlink bitrates are not the norm. In general, if a high packet data rate is flowing in one direction, only packet acknowledgments, which can be highly compressed, are needed in the reverse direction. Moreover, high bit rate services on the uplink are less in demand than high bit rate services on the downlink. A common high-bit rate downlink application would be net-browsing using a mobile laptop. A less often demanded high bit rate uplink service example would be sending an e-mail from a camera-phone with an image attachment. In still less demand are bidirectional high bit rate transmission services. The latter may of course always be implemented by transmitting bursts of high data rate on the downlink simultaneously with only acknowledgements and channel feedback on the uplink, alternating with high data rate bursts on the uplink with simultaneously lower data rate combined with acknowledgements and possibly uplink channel state information on the downlink.

Coherent macrodiversity can always be achieved on the uplink by collaborating network receivers, without the need for an uplink channel state feedback mechanism. Full uplink channel state feedback is not so important for a mobile station 10 that transmits using only a single antenna 20, and there is little more it can do to optimize its transmission than adaptively selecting the highest useable bit rate. Thus, when high bitrates are demanded on the downlink, the present invention describes a way to utilize spare uplink capacity to provide real time downlink channel state feedback in an OFDM system.

Thus, it has been explained how the ability of an OFDM system to convey vectors of arbitrary complex value can be exploited to provide feedback from mobile stations to network stations that allows the network stations to continuously determine uplink and downlink channels. The downlink channels so determined may be used by the network to perform downlink coherent macrodiversity with interference cancellation in which the same radio spectrum may be used to transmit different data to more than one mobile station 10 at the same time. As an extension of this, if the mobile station 60 is equipped with more than one antenna 20, and transmission of channel-related feedback values for each antenna 20 is provided, then the base stations 60 can determine downlink channels to each antenna 20, which is required for implementing MIMO schemes.

It will be appreciated that while the above generally describes the invention in terms of providing downlink channel feedback from a mobile station 10 to a base station 60, the present invention may also be utilized to provide uplink channel feedback from a network base station to a mobile station. The present invention may, of course, be carried out in other ways than those specifically set forth herein.

## Claims

1. A method of providing channel feedback from a first multi-carrier transceiver (100) to a remote transceiver (60), the method comprising:

   receiving a reference value on a reception subchannel of an OFDM signal received from the remote transceiver (60);
   applying one or more frequency transforms to the received OFDM signal to separate the received reference value from values carried by other reception subchannels;
   mapping a feedback value to a single transmission subchannel of an outgoing OFDM signal, said feedback value comprising the received reference value or an un-encoded channel estimate derived therefrom by calculating a channel estimate based on the received reference value and bypassing transmission encoding electronics to generate the un-encoded channel estimate; and
   transmitting the outgoing OFDM signal to the remote transceiver (60) to provide the feedback value to the remote transceiver (60).

2. The method of claim 1 wherein mapping the feedback value comprises frequency multiplexing the feedback value with one or more outgoing pilot values such that the feedback value and the outgoing pilot values are each associated with different transmission subchannels of the outgoing OFDM signal, and such that the feedback value is associated with the single transmission subchannel of the outgoing OFDM signal.

3. The method of claim 2 wherein frequency multiplexing the feedback value with the one or more outgoing pilot values further comprises frequency multiplexing the feedback value with the one or more outgoing pilot values and one or more outgoing data values such that the feedback value, outgoing pilot values, and outgoing data values are associated with different transmission subchannels of the outgoing OFDM signal.

4. The method of claim 2 wherein frequency multiplexing the feedback value and the outgoing pilot values comprises frequency multiplexing the feedback value and the outgoing pilot values according to a predetermined frequency multiplexing pattern.

5. The method of claim 1:

   wherein mapping the feedback value to the single transmission subchannel comprises mapping the feedback value and an outgoing pilot value to the same single transmission subchannel of the outgoing OFDM signal for transmission during different time intervals, and
   wherein transmitting the outgoing OFDM signal to the remote transceiver comprises transmitting a first outgoing OFDM signal comprising the feedback value mapped to the single transmission subchannel to the remote transceiver during a first time interval, and transmitting a second outgoing OFDM signal comprising the outgoing pilot value on the same single transmission subchannel to the remote transceiver (60) during a second time interval.

6. The method of claim 1 wherein mapping the feedback value to the single transmission subchannel comprises:

generating a linear combination of the feedback value and an outgoing pilot or data value; and mapping the linear combination to the single transmission subchannel of the outgoing OFDM signal.

7. An OFDM transceiver (100) configured to provide channel feedback to a remote transceiver (60), the OFDM transceiver (100) comprising:

a reception unit (130) configured to receive a reference value on a reception subchannel of an OFDM signal received from the remote transceiver (60);
a demodulator (140) configured to apply a frequency transform to the received OFDM signal to separate the received reference value from signals carried by other reception subchannels;
a mapping unit (190) configured to map a feedback value to a single transmission subchannel of an outgoing OFDM signal, said feedback value comprising the received reference value or an un-encoded channel estimate derived therefrom;
a processor (150) disposed between the demodulator (140) and the mapping unit (190) and configured to calculate a channel estimate based on the received reference value, and configured to bypass transmission encoding electronics to generate the un-encoded channel estimate applied to the mapping unit (190); and
a transmission unit (180) configured to transmit the outgoing OFDM signal to the remote transceiver (60) to provide the feedback value to the remote transceiver (60).

8. The OFDM transceiver (100) of claim 7 wherein the mapping unit (190) is configured to map the feedback value to the single transmission subchannel by frequency multiplexing the feedback value with one or more outgoing pilot values such that the feedback value and the outgoing pilot values are each associated with different transmission subchannels of the outgoing OFDM signal, and such that the feedback value is associated with the single transmission subchannel of the outgoing OFDM signal.

9. The OFDM transceiver (100) of claim 8 wherein the mapping unit (190) is configured to frequency multiplex the feedback value with the one or more outgoing pilot values by frequency multiplexing the feedback value with the one or more outgoing pilot values and one or more outgoing data values such that the feedback value, outgoing pilot values, and outgoing data values are associated with different transmission subchannels of the outgoing OFDM signal.

10. The OFDM transceiver (100) of claim 8 wherein the mapping unit (190) is configured to frequency multiplex the feedback value and the outgoing pilot values by frequency multiplexing the feedback value and the outgoing pilot values according to a predetermined frequency multiplexing pattern.

11. The OFDM transceiver (100) of claim 7:

wherein the mapping unit (190) is configured to map the feedback value to the single transmission subchannel by mapping the feedback value and an outgoing pilot value to the same single transmission subchannel of the outgoing OFDM signal for transmission during different time intervals, and
wherein the transmission unit (180) is configured to transmit the outgoing OFDM signal to the remote transceiver (60) by transmitting a first outgoing OFDM signal comprising the feedback value mapped to the single transmission subchannel to the remote transceiver (60) during a first time interval, and is configured to transmit a second outgoing OFDM comprising the outgoing pilot value on the same single transmission subchannel to the remote transceiver (60) during a second time interval.

12. The OFDM transceiver (100) of claim 7 wherein the mapping unit (190) is configured to map the feedback value to the single transmission subchannel by:

generating a linear combination of the feedback value and an outgoing pilot or data value; and mapping the linear combination to the single transmission subchannel of the outgoing OFDM signal.

13. The OFDM transceiver (100) of claim 7:

wherein the transceiver (100) comprises one or more reception antennas configured to receive the OFDM signal from one or more transmission antennas associated with the remote transceiver,
wherein a separate wireless channel exists between each pair of transmission and reception antennas,
wherein the mapping unit (190) is configured to map, in a one-to-one correspondence, each of one or more feedback values to a corresponding single transmission subchannel,wherein each mapped feedback value corresponds to a different wireless channel, and

wherein the transmission unit (180) is configured to transmit the outgoing OFDM signal to the remote transceiver (60) to provide the one or more feedback values to the remote transceiver (60).

14. The OFDM transceiver (100) of claim 7 further comprising an OFDM modulator comprising at least one frequency transform unit, wherein the mapping unit (190) is configured to map the feedback value to a single transmission subchannel by mapping the feedback value to a single input of one of the frequency transform units.

15. The OFDM transceiver (100) of claim 14 wherein the at least one frequency transform unit comprises at least one of a an inverse discrete Fourier transform unit and a separate K-point frequency transform unit, and wherein the mapping unit (190) is configured to map the feedback value to a single input of a transmission frequency transform unit by mapping the feedback value to a single input of the inverse discrete Fourier transform unit or to a single input of the K-point frequency transform unit.

**Patentansprüche**

1. Ein Verfahren zum Bereitstellen einer Kanalrückkopplung von einem ersten Multiträger-Transceiver (100) zu einem Ferntransceiver (60), wobei das Verfahren umfasst:

Empfangen eines Referenzwerts eines Empfangssubkanals eines von dem Ferntransceiver (60) empfangenen OFDM-Signals;
Anwenden von einem oder mehreren Frequenztransformen auf ein empfangenes OFDM-Signal zum Trennen des empfangenen Referenzwerts von durch andere Empfangssubkanäle getragenen Werten;
Mapping eines Rückkopplungswerts auf einen einzelnen Sendesubkanal eines ausgehenden OFDM-Signals, wobei der Rückkopplungswert den empfangenen Referenzwert oder eine nicht kodierte Kanalabschätzung, welche davon durch Berechnen einer Kanalabschätzung basierend auf dem empfangenen Referenzwert abgeleitet ist, umfasst und eine Sendecodierelektronik zum Erzeugen der nichtkodierten Kanalabschätzung umgeht; und
Senden des ausgehenden OFDM-Signals an den Ferntransceiver (60) zum Bereitstellen des Rückkopplungswerts an den Ferntransceiver (60).

2. Das Verfahren aus Anspruch 1, wobei das Mapping des Rückkopplungswerts ein Frequenz-Multiplexen des Rückkopplungswerts mit einem oder mehreren ausgehenden Pilotwerten derart umfasst, dass der Rückkopplungswert und die ausgehenden Pilotwerte jeweils mit unterschiedlichen Sendesubkanälen des ausgehenden OFDM-Signals verknüpft sind, und derart, dass der Rückkopplungswert mit dem einzelnen Sendesubkanal des ausgehenden OFDM-Signals verknüpft ist.

3. Das Verfahren aus Anspruch 2, wobei das Frequenz-Multiplexen des Rückkopplungswerts mit dem einen oder mehreren ausgehenden Pilotwerten weiter ein Frequenz-Multiplexen des Rückkopplungswerts mit dem einen oder mehreren ausgehenden Pilotwerten und einem oder mehreren ausgehenden Datenwerten derart umfasst, dass der Rückkopplungswert, die ausgehenden Pilotwerte und die ausgehenden Datenwerte mit unterschiedlichen Sendesubkanälen des ausgehenden OFDM-Signals verknüpft sind.

4. Das Verfahren aus Anspruch 2, wobei das Frequenz-Multiplexen des Rückkopplungswerts und der ausgehenden Pilotwerte ein Frequenz-Multiplexen des Rückkopplungswerts und der ausgehenden Pilotwerte entsprechend einem vorbestimmten Frequenz-Multiplex-Muster umfasst.

5. Das Verfahren aus Anspruch 1:

wobei das Mapping des Rückkopplungswerts auf den einzelnen Sendesubkanal ein Mapping des Rückkopplungswerts und eines ausgehenden Pilotwerts auf denselben einzelnen Sendesubkanal des ausgehenden OFDM-Signals zum Senden während unterschiedlichen Zeitintervallen umfasst, und
wobei das Senden des ausgehenden OFDM-Signals an den Ferntransceiver ein Senden eines ersten ausgehenden OFDM-Signals, welches den auf den einzelnen Sendesubkanal zu dem Ferntransceiver gemappten Rückkopplungswert umfasst, während eines ersten Zeitintervalls und ein Senden eines zweiten ausgehenden OFDM-Signals, welches den ausgehenden Pilotwert auf demselben einzelnen Sendesubkanal zu dem Ferntransceiver (60) umfasst, während eines zweiten Zeitintervalls umfasst.

6. Das Verfahren aus Anspruch 1, wobei das Mapping des Rückkopplungswerts auf den einzelnen Sendesubkanal umfasst:

Erzeugen einer Linearkombination des Rückkopplungswerts und eines ausgehenden Pilot- oder Datenwerts; und

Mapping der Linearkombination auf den einzelnen Sendesubkanal des ausgehenden OFDM-Signals.

7. Ein OFDM-Transceiver (100), ausgebildet zum Bereitstellen einer Kanalrückkopplung an einen Ferntransceiver (60), wobei der OFDM-Transceiver (100) umfasst:

eine Empfangseinheit (130), ausgebildet zum Empfangen eines Referenzwerts auf einem Empfangssubkanal eines von dem Ferntransceiver (60) empfangenen OFDM-Signals;

ein Demodulator (140), ausgebildet zum Anwenden eines Frequenztransformen auf das empfangene OFDM-Signal zum Trennen des empfangenen Referenzwerts von durch andere Empfangssubkanäle getragenen Signalen;

eine Mappingeinheit (190), ausgebildet zum Mapping eines Rückkopplungswerts auf einen einzelnen Sendesubkanal eines ausgehenden OFDM-Signals, wobei der Rückkopplungswert den empfangenen Referenzwert oder eine davon abgeleitete nicht codierte Kanalabschätzung umfasst;

ein Prozessor (150), angeordnet zwischen dem Demodulator (140) und der Mappingeinheit (190) und ausgebildet zum Berechnen einer Kanalabschätzung basierend auf dem empfangenen Referenzwert und ausgebildet zum Umgehen einer Sendecodierelektronik zum Erzeugen der auf die Mappingeinheit (190) angewendeten nicht kodierten Kanalabschätzung; und

eine Sendeeinheit (180), ausgebildet zum Senden des ausgehenden OFDM-Signals an den Ferntransceiver (60) zum Bereitstellen des Rückkopplungswerts an den Ferntransceiver (60).

8. Der OFDM-Transceiver (100) aus Anspruch 7, wobei die Mappingeinheit (190) zum Mapping des Rückkopplungswerts auf den einzelnen Sendesubkanal durch ein Frequenz-Multiplexen des Rückkopplungswerts mit einem oder mehreren ausgehenden Pilotwerten derart ausgebildet ist, dass der Rückkopplungswert und die ausgehenden Pilotwerte jeweils mit unterschiedlichen Sendesubkanälen des ausgehenden OFDM-Signals verknüpft sind, und derart, dass der Rückkopplungswert mit dem einzelnen Sendesubkanal des ausgehenden OFDM-Signals verknüpft ist.

9. Der OFDM-Transceiver (100) aus Anspruch 8, wobei die Mappingeinheit (190) zum Frequenz-Multiplexen des Rückkopplungswerts mit dem einen oder mehreren ausgehenden Pilotwerten durch Frequenz-Multiplexen des Rückkopplungswerts mit dem einen oder mehreren ausgehenden Pilotwerten und einem oder mehreren ausgehenden Datenwerten derart ausgebildet ist, dass der Rückkopplungswert, die ausgehenden Pilotwerte und die ausgehenden Datenwerte mit unterschiedlichen Sendesubkanälen des ausgehenden OFDM-Signals verknüpft sind.

10. Der OFDM-Transceiver (100) aus Anspruch 8, wobei die Mappingeinheit (190) zum Frequenz-Multiplexen des Rückkopplungswerts und der ausgehenden Pilotwerte durch Frequenz-Multiplexen des Rückkopplungswerts und der ausgehenden Pilotwerte entsprechend einem vorbestimmten Frequenz-Multiplex-Muster ausgebildet ist.

11. Der OFDM-Transceiver (100) aus Anspruch 7:

wobei die Mappingeinheit (190) zum Mapping des Rückkopplungswerts auf den einzelnen Sendesubkanal durch Mapping des Rückkopplungswerts und eines ausgehenden Pilotwerts auf denselben einzelnen Sendesubkanal des ausgehenden OFDM-Signals für ein Senden während unterschiedlichen Zeitintervallen ausgebildet ist, und

wobei die Sendeeinheit (180) zum Senden des ausgehenden OFDM-Signals an den Ferntransceiver (60) durch Senden eines ersten ausgehenden OFDM-Signals, welches den auf den einzelnen Sendesubkanal zu dem Ferntransceiver (60) gemappten Rückkopplungswert umfasst, während eines ersten Zeitintervalls und zum Senden eines zweiten ausgehenden OFDM, welches den ausgehenden Pilotwert auf demselben einzelnen Sendesubkanal zu dem Ferntransceiver (60) umfasst, während einem zweiten Zeitintervall ausgebildet ist.

12. Der OFDM-Transceiver (100) aus Anspruch 7, wobei die Mappingeinheit (190) zum Mapping des Rückkopplungswerts auf den einzelnen Sendesubkanal ausgebildet ist durch:

Erzeugen einer Linearkombination des Rückkopplungswerts und eines ausgehenden Pilot- oder Datenwerts; und

Mapping der Linearkombination auf den einzelnen Sendesubkanal des ausgehenden OFDM-Signals.

13. Der OFDM-Transceiver (100) aus Anspruch 7:

wobei der Transceiver (100) eine oder mehrere Empfangsantennen umfasst, welche zum Empfangen des OFDM-Signals von einer oder mehreren mit dem Ferntransceiver verknüpften Sendeantennen ausgebildet sind,

wobei ein separater drahtloser Kanal zwischen jeweils einem Paar von Sende- und Empfangsantennen existiert,

wobei die Mappingeinheit (190) zum Mapping in einer Eins-zu-Eins-Korrespondenz eines jeden von einem oder mehreren Rückkopplungswerten auf einen zugehörigen einzelnen Sendesubkanal ausgebildet ist, wobei jeder gemappte Rückkopplungswert zu einem unterschiedlichen drahtlosen Kanal gehört, und wobei die Sendeeinheit (180) zum Senden des ausgehenden OFDM-Signals an den Ferntransceiver (60) zum Bereitstellen des einen oder der mehreren Rückkopplungswerte an den Ferntransceiver (60) ausgebildet ist.

14. Der OFDM-Transceiver (100) aus Anspruch 7, weiter umfassend einen OFDM-Modulator, welcher zumindest eine Frequenztransformeinheit umfasst, wobei die Mappingeinheit (190) zum Mapping des Rückkopplungswerts auf einen einzelnen Sendesubkanal durch Mapping des Rückkopplungswerts auf eine einzelne Eingabe eines der Frequenztransformeinheiten ausgebildet ist.

15. Der OFDM-Transceiver (100) aus Anspruch 14, wobei die zumindest eine Frequenztransformeinheit eine Invers-Diskret-Fouriertransformeinheit und/oder eine getrennte K-Punkt-Frequenztransformeinheit umfasst, und wobei die Mappingeinheit (190) zum Mapping des Rückkopplungswerts auf eine einzelne Eingabe einer Sende-Frequenztransformeinheit durch Mapping des Rückkopplungswerts auf eine einzelne Eingabe der Invers-Diskret-Fouriertransformeinheit oder auf eine einzelne Eingabe der K-Punkt-Frequenztransformeinheit ausgebildet ist.

**Revendications**

1. Procédé de délivrance d'une rétroaction de canal d'un premier émetteur/récepteur à porteuses multiples (100) à un émetteur/récepteur distant (60), le procédé comprenant :

la réception d'une valeur de référence sur un sous-canal de réception d'un signal de multiplexage à division de fréquence orthogonale (OFDM) reçu à partir de l'émetteur/récepteur distant (60) ;

l'application d'une ou de plusieurs transformées de fréquence au signal de multiplexage à division de fréquence orthogonale reçu de façon à séparer la valeur de référence reçue vis-à-vis de valeurs portées par d'autres sous-canaux de réception ;

la projection d'une valeur de rétroaction vers un sous-canal de transmission unique d'un signal de multiplexage à division de fréquence orthogonale sortant, ladite valeur de rétroaction comprenant la valeur de référence reçue ou une estimation de canal non codée dérivée à partir de celle-ci par calcul d'une estimation de canal en fonction de la valeur de référence reçue et par contournement de circuits électroniques de codage de transmission afin de générer l'estimation de canal non codée ; et

la transmission du signal de multiplexage à division de fréquence orthogonale sortant à l'émetteur/récepteur distant (60) de façon à délivrer la valeur de rétroaction à l'émetteur/récepteur distant (60).

2. Procédé selon la revendication 1, dans lequel la projection de la valeur de rétroaction comprend le multiplexage en fréquence de la valeur de rétroaction avec une ou plusieurs valeurs pilotes sortantes, de telle sorte que la valeur de rétroaction et les valeurs pilotes sortantes soit chacune associées à des sous-canaux de transmission différents du signal de multiplexage à division de fréquence orthogonale sortant, et de telle sorte que la valeur de rétroaction soit associée au sous-canal de transmission unique du signal de multiplexage à division de fréquence orthogonale sortant.

3. Procédé selon la revendication 2, dans lequel le multiplexage en fréquence de la valeur de rétroaction avec les valeurs pilotes sortantes au nombre d'une ou de plusieurs comprend de plus le multiplexage en fréquence de la valeur de rétroaction avec les valeurs pilotes sortantes au nombre d'une ou de plusieurs et une ou plusieurs valeurs de données sortantes, de telle sorte que la valeur de rétroaction, les valeurs pilotes sortantes, et les valeurs de données sortantes, soient associées à des sous-canaux de transmission différents du signal de multiplexage à division de fréquence orthogonale sortant.

4. Procédé selon la revendication 2, dans lequel le multiplexage en fréquence de la valeur de rétroaction et des valeurs pilotes sortantes comprend le multiplexage en fréquence de la valeur de rétroaction et des valeurs pilotes sortantes selon un motif de multiplexage en fréquence prédéterminé.

5. Procédé selon la revendication 1 :

dans lequel la projection de la valeur de rétroaction vers le sous-canal de transmission unique comprend la projection de la valeur de rétroaction et d'une valeur pilote sortante vers le même sous-canal de transmission unique du signal de multiplexage à division de fréquence orthogonale sortant pour la transmission durant des intervalles de temps différents, et

dans lequel la transmission du signal de multiplexage à division de fréquence orthogonale sortant à l'émetteur/récepteur distant comprend la transmission d'un premier signal de multiplexage à division de fréquence orthogonale sortant comprenant la valeur de rétroaction projetée vers le sous-canal de transmission unique à l'émetteur/récepteur distant durant un premier intervalle de temps, et la transmission d'un deuxième signal de multiplexage à division de fréquence orthogonale sortant comprenant la valeur pilote sortante sur le même sous-canal de transmission unique à l'émetteur/récepteur distant (60) durant un deuxième intervalle de temps.

6. Procédé selon la revendication 1, dans lequel la projection de la valeur de rétroaction vers le sous-canal de transmission unique comprend :

la génération d'une combinaison linéaire de la valeur de rétroaction et d'une valeur pilote ou de données sortante ; et
la projection de la combinaison linéaire vers le sous-canal de transmission unique du signal de multiplexage à division de fréquence orthogonale sortant.

7. Emetteur/récepteur à multiplexage à division de fréquence orthogonale (OFDM) (100), configuré de façon à délivrer une rétroaction de canal à un émetteur/récepteur distant (60), l'émetteur/récepteur à multiplexage à division de fréquence orthogonale (100) comprenant :

une unité de réception (130), configurée de façon à recevoir une valeur de référence sur un sous-canal de réception d'un signal de multiplexage à division de fréquence orthogonale reçu à partir de l'émetteur/récepteur distant (60) ;
un démodulateur (140), configuré de façon à appliquer une transformée de fréquence au signal de multiplexage à division de fréquence orthogonale reçu de façon à séparer la valeur de référence reçue vis-à-vis de signaux portés par d'autres sous-canaux de réception ;
une unité de projection (190), configurée de façon à projeter une valeur de rétroaction vers un sous-canal de transmission unique d'un signal de multiplexage à division de fréquence orthogonale sortant, ladite valeur de rétroaction comprenant la valeur de référence reçue ou une estimation de canal non codée dérivée à partir de celle-ci ;
un processeur (150), disposé entre le démodulateur (140) et l'unité de projection (190), et configuré de façon à calculer une estimation de canal en fonction de la valeur de référence reçue, et configuré de façon à contourner des circuits électroniques de codage de transmission de façon à générer l'estimation de canal non codée appliquée à l'unité de projection (190) ; et
une unité de transmission (180), configurée de façon à transmettre le signal de multiplexage à division de fréquence orthogonale sortant à l'émetteur/récepteur distant (60) de façon à délivrer la valeur de rétroaction à l'émetteur/récepteur distant (60).

8. Emetteur/récepteur à multiplexage à division de fréquence orthogonale (100) selon la revendication 7, dans lequel l'unité de projection (190) est configurée de façon à projeter la valeur de rétroaction vers le sous-canal de transmission unique par multiplexage en fréquence de la valeur de rétroaction avec une ou plusieurs valeurs pilotes sortantes, de telle sorte que la valeur de rétroaction et les valeurs pilotes sortantes soient chacune associées à des sous-canaux de transmission différents du signal de multiplexage à division de fréquence orthogonale sortant, et de telle sorte que la valeur de rétroaction soit associée au sous-canal de transmission unique du signal de multiplexage à division de fréquence orthogonale sortant.

9. Emetteur/récepteur à multiplexage à division de fréquence orthogonale (100) selon la revendication 8, dans lequel l'unité de projection (190) est configurée de façon à multiplexer en fréquence la valeur de rétroaction avec les valeurs pilotes sortantes au nombre d'une ou de plusieurs par multiplexage en fréquence de la valeur de rétroaction avec les valeurs pilotes sortantes au nombre d'une ou de plusieurs et une ou plusieurs valeurs de données sortantes, de telle sorte que la valeur de rétroaction, les valeurs pilotes sortantes, et les valeurs de données sortantes, soit associées à des sous-canaux de transmission différents du signal de multiplexage à division de fréquence orthogonale sortant.

10. Emetteur/récepteur à multiplexage à division de fréquence orthogonale (100) selon la revendication 8, dans lequel l'unité de projection (190) est configurée de façon à multiplexer en fréquence la valeur de rétroaction et les valeurs pilotes sortantes par multiplexage en fréquence de la valeur de rétroaction et des valeurs pilotes sortantes selon un motif de multiplexage en fréquence prédéterminé.

11. Emetteur/récepteur à multiplexage à division de fréquence orthogonale (100) selon la revendication 7 :

dans lequel l'unité de projection (190) est configurée de façon à projeter la valeur de rétroaction vers le sous-canal de transmission unique par projection de la valeur de rétroaction et d'une valeur pilote sortante vers le même sous-canal de transmission unique du signal de multiplexage à division de fréquence orthogonale sortant pour la transmission durant des intervalles de temps différents, et

dans lequel l'unité de transmission (180) est configurée de façon à transmettre le signal de multiplexage à division de fréquence orthogonale sortant à l'émetteur/récepteur distant (60) par transmission d'un premier signal de multiplexage à division de fréquence orthogonale sortant comprenant la valeur de rétroaction projetée vers le sous-canal de transmission unique à l'émetteur/récepteur distant (60) durant un premier intervalle de temps, et est configurée de façon à transmettre un deuxième signal de multiplexage à division de fréquence orthogonale sortant comprenant la valeur pilote sortante sur le même sous-canal de transmission unique à l'émetteur/récepteur distant (60) durant un deuxième intervalle de temps.

12. Emetteur/récepteur à multiplexage à division de fréquence orthogonale (100) selon la revendication 7, dans lequel l'unité de projection (190) est configurée de façon à projeter la valeur de rétroaction vers le sous-canal de transmission unique par :

génération d'une combinaison linéaire de la valeur de rétroaction et d'une valeur pilote ou de données sortante ; et

projection de la combinaison linéaire vers le sous-canal de transmission unique du signal de multiplexage à division de fréquence orthogonale sortant.

13. Emetteur/récepteur à multiplexage à division de fréquence orthogonale (100) selon la revendication 7 :

dans lequel l'émetteur/récepteur (100) comprend une ou plusieurs antennes de réception configurées de façon à recevoir le signal de multiplexage à division de fréquence orthogonale à partir d'une ou de plusieurs antennes d'émission associées à l'émetteur/récepteur distant,

dans lequel un canal sans fil séparé existe entre chaque paire d'antennes d'émission et de réception,

dans lequel l'unité de projection (190) est configurée de façon à projeter, sous une correspondance de un à un, chacune des valeurs de rétroaction au nombre d'une ou de plusieurs vers un sous-canal de transmission unique correspondant, chaque valeur de rétroaction projetée correspondant à un canal sans fil différent, et

dans lequel l'unité de transmission (180) est configurée de façon à transmettre le signal de multiplexage à division de fréquence orthogonale sortant à l'émetteur/récepteur distant (60) de façon à délivrer les valeurs de rétroaction au nombre d'une ou de plusieurs à l'émetteur/récepteur distant (60).

14. Emetteur/récepteur à multiplexage à division de fréquence orthogonale (100) selon la revendication 7, comprenant de plus un modulateur de multiplexage à division de fréquence orthogonale comprenant au moins une unité de transformée de fréquence, dans lequel l'unité de projection (190) est configurée de façon à projeter la valeur de rétroaction vers un sous-canal de transmission unique par projection de la valeur de rétroaction vers une entrée unique de l'une des unités de transformée de fréquence.

15. Emetteur/récepteur à multiplexage à division de fréquence orthogonale (100) selon la revendication 14, dans lequel l'unité de transformée de fréquence au nombre d'au moins une comprend au moins l'une d'une unité de transformée de Fourier discrète inverse et d'une unité de transformée de fréquence de point K séparée, et dans lequel l'unité de projection (190) est configurée de façon à projeter la valeur de rétroaction vers une entrée unique d'une unité de transformée de fréquence de transmission par projection de la valeur de rétroaction vers une entrée unique de l'unité de transformée de Fourier discrète inverse ou vers une entrée unique de l'unité de transformée de fréquence de point K.

*FIG. 1*

**FIG. 2**

EP 2 517 395 B1

**FIG. 3**

FIG. 4

*FIG. 5*

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6996380 B
- US 6996375 B
- US 7197282 B
- US 7224942 B
- US 20030036359 A1
- WO 2006034577 A1
- US 5084669 A
- US 5070303 A
- US 5048059 A
- US 126576 A
- US 255343 A
- US 045157 A
- US 478473 A
- US 478520 A
- US 25534308 A